# FASCICULE DE BREVET EUROPEEN

(11) **EP 1 286 100 B1**
(45) Date de publication et mention de la délivrance du brevet: **04.05.2005**
(21) Numéro de dépôt: 02292052.4
(22) Date de dépôt: 16.08.2002
(51) Int. Cl.: F16L 47/00, F16L 58/18

(54) **Elément de tuyauterie comportant un revêtement intérieur en résine fluorée notamment en polytétrafluoroéthylène**
Rohrstück mit Innenbeschichtung aus Fluorharz, insbesondere Polytetrafluorethylen
Pipe section having an internal layer made of fluoro-resin, in particular polytetrafluoroethylene

(30) Priorité: 20.08.2001 FR 0110927
(43) Date de publication de la demande: 26.02.2003
(73) Titulaire: Carbone Lorraine Equipements Genie Chimique, 54530 Pagny Sur Moselle (FR)
(72) Inventeur: Macheret, Olivier, 52600 Heuilley le Grand (FR); Dugand, Pascal, 52200 Perrancey les Vieux Moulins (FR)
(74) Mandataire: Fénot, Dominique

(56) Documents cités:
- CH-A- 634 137
- DE-B- 1 115 446
- US-A- 3 718 573

## Description

La présente invention est relative à des éléments de tuyauterie comportant un revêtement intérieur en résine fluorée notamment en polytétrafluoroéthylène (PTFE).

On utilise couramment dans de nombreuses industries, par exemple dans l'industrie des semi-conducteurs, dans l'industrie chimique et pharmaceutique, pour le transport de fluides fortement corrosifs des tuyauteries métalliques, notamment en acier, revêtues intérieurement d'une matière chimiquement inerte telle qu'une résine fluorée comme le PTFE.

Le revêtement intérieur de PTFE peut être mis en place dans les éléments de tuyauterie par tous procédés appropriés, notamment par moulage isostatique.

Les éléments de tuyauterie ainsi revêtus intérieurement donnent en général satisfaction dans une large plage de températures en cours d'utilisation à des pressions proches de la pression atmosphérique.

On constate cependant l'apparition de défauts liés à un effet de "collapse" du revêtement intérieur en PTFE lorsque l'élément de tuyauterie est amené à être soumis à des conditions de vide, même peu poussées, à des températures relativement élevées.

On a ainsi constaté qu'un raccord de tuyauterie standard en T en acier d'un diamètre de 12 pouces (30,48 cm) muni d'un revêtement intérieur de PTFE de 12 mm d'épaisseur commençait à se dégrader sérieusement lorsqu'il était maintenu à une pression absolue inférieure à 790 mbars (600 mm Hg).

La présente invention se propose de réaliser un élément de tuyauterie métallique, notamment en acier, comportant un revêtement intérieur, chimiquement inerte, en résine fluorée, notamment en PTFE offrant une tenue améliorée lors d'une mise en oeuvre sous vide, même prolongée et à température élevée, les éléments de tuyauterie selon l'invention conservant de manière surprenante leurs propriétés au niveau du revêtement à des pressions de l'ordre de 65 mbars (50 mm Hg).

Un élément de tuyauterie selon l'invention se caractérise essentiellement par le fait qu'il comprend au moins une bague annulaire noyée dans l'épaisseur du revêtement intérieur.

La section, de préférence circulaire, de la ou des bagues annulaires et leur diamètre sont choisis de telle manière que la ou les bagues annulaires soient entièrement enrobées du revêtement tant vers l'intérieur de l'élément de tuyauterie que vers l'extérieur contre la face interne de l'élément de tuyauterie métallique.

La ou les bagues annulaires sont de préférence en acier, notamment en acier ayant subi un traitement anti-corrosion.

Selon le type de l'élément de tuyauterie, on peut prévoir une ou plusieurs bagues annulaires.

Ainsi pour des raccords en brides en T, on peut mettre en oeuvre au moins une bague annulaire dans chacune des branches du raccord en T à distance des brides d'extrémité.

Dans un exemple de mise en oeuvre particulier, on met en place une bague annulaire dans une des branches, par exemple la branche en dérivation, et deux bagues annulaires dans chacune des autres branches, par exemple les branches de conduit principal.

Ainsi l'élément de tuyauterie sous forme de raccord en T selon l'invention comporte en tout cinq bagues annulaires, de préférence identiques.

Les bagues annulaires lorsqu'elles sont deux ou plus dans un même élément de tuyauterie ou dans une même branche d'un élément de tuyauterie sont espacées les unes des autres.

Ainsi, par exemple pour un raccord à brides coudé à 90°, on peut prévoir trois bagues annulaires, de préférence identiques, espacées les unes des autres et des brides d'extrémité.

La présente invention est applicable à tous les éléments de tuyauterie munis d'un revêtement intérieur chimiquement inerte, notamment en résine fluorée, tels que par exemple, outre les coudes et les raccords en T mentionnés ci-dessus, des raccords en croix et tous type de raccords de réduction et de dérivation. L'invention s'applique également aux sections droites de tuyauteries.

Dans le but de mieux faire comprendre l'invention on va maintenant décrire à titre d'exemples nullement limitatifs deux modes de réalisation particuliers en se référant au dessin annexé dans lequel :
- la figure 1 illustre un élément de tuyauterie sous forme de raccord en T selon l'invention,
- la figure 2 est une vue en coupe schématique de l'élément de la figure 1 et,
- la figure 3 est une vue en coupe d'un élément de tuyauterie sous forme de coude selon l'invention.

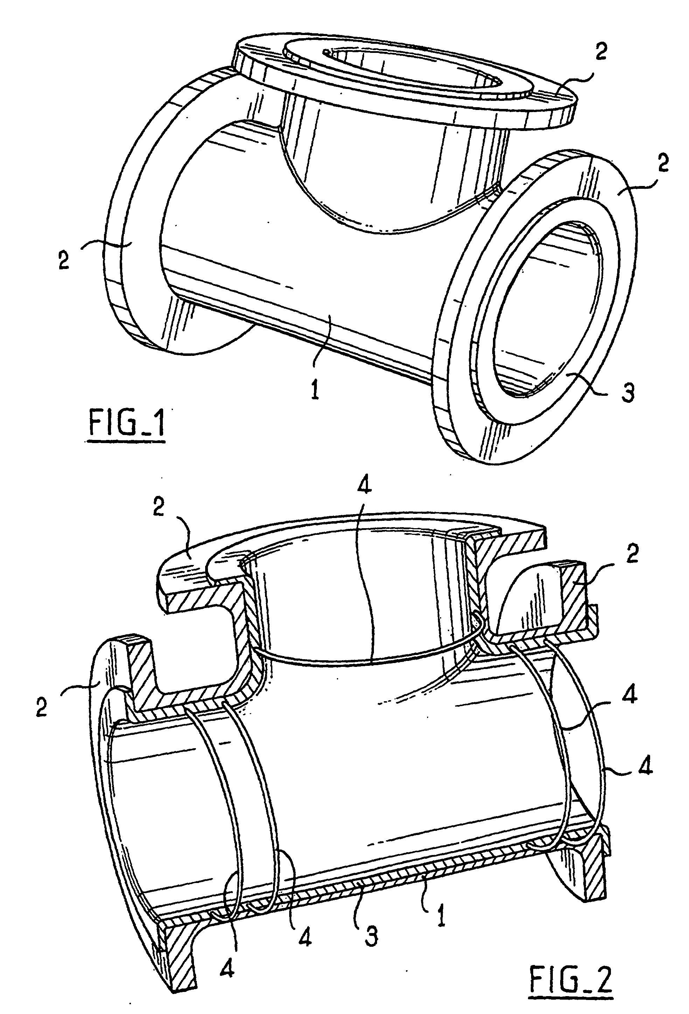

L'élément de tuyauterie représenté à la figure 1 est un raccord en forme de T en acier 1 muni de trois brides de fixation 2, le raccord comportant un revêtement intérieur 3 en PTFE.

Le revêtement de PTFE a été mis en place par moulage isostatique et, lors du remplissage, il a été mis en place dans l'épaisseur du PTFE cinq bagues annulaires 4 disposées comme on le voit sur la figure 2.

Pour un raccord en T d'un diamètre de 12 pouces (30,48 cm), chacune des bagues annulaires 4 est réalisée en acier traité anti-corrosion par exemple par plasma. Chaque bague annulaire présente un diamètre extérieur de 292 mm et une section circulaire d'un diamètre de 5 mm.

Dans le mode de réalisation illustré à la figure 2, quatre bagues 4 sont disposées par paires dans les branches de circuit principal, les bagues d'une même paire étant distantes de 50 mm et les bagues les plus à l'extérieur étant distantes de 85 mm par rapport à la bride correspondante.

Une bague annulaire 4 est disposée dans la branche en dérivation à la même distance de la bride d'extrémité correspondante.

Le revêtement de PTFE présente une épaisseur de 12 mm et les bagues 4 sont entièrement noyées dans l'épaisseur du revêtement de PTFE à une distance d'au moins 2,7 mm de la face intérieure du revêtement de PTFE qui sera en contact avec les fluides chimiques, généralement corrosifs, amenés à circuler dans la tuyauterie. La distance ainsi prévue entre les bagues et la face intérieure du revêtement constitue une barrière chimique vis-à-vis du fluide qui pourrait pénétrer dans le revêtement du fait de la perméabilité inhérente du PTFE, le risque d'endommagement des bagues annulaires étant dans ce cas également réduit par le traitement anti-corrosion auquel elles peuvent être soumises avant la mise en place.

Une fois les bagues annulaires insérées, la pièce a été frittée puis inspectée au test électrique afin de détecter d'éventuelles porosités ou fissures qui auraient pu être générées par l'introduction des bagues.

Aucun défaut n'ayant été constaté, la pièce a été soumise à des mesures de tenue au vide selon la norme de test ASTM/F1545. Cette norme prévoit de tester les tuyauteries au vide et il est standard de soumettre la pièce au vide souhaité pendant une durée de huit heures afin de prendre en compte le fluage naturel du PTFE.

La pièce telle que réalisée à été mise en température à 200°C pendant douze heures puis on a appliqué un vide avec une valeur de pression à la pompe à vide de 65 mbars (50 mm Hg) pendant huit heures.

On n'a constaté aucune dégradation du revêtement de PTFE et notamment aucun effet "d'écrasement collapse".

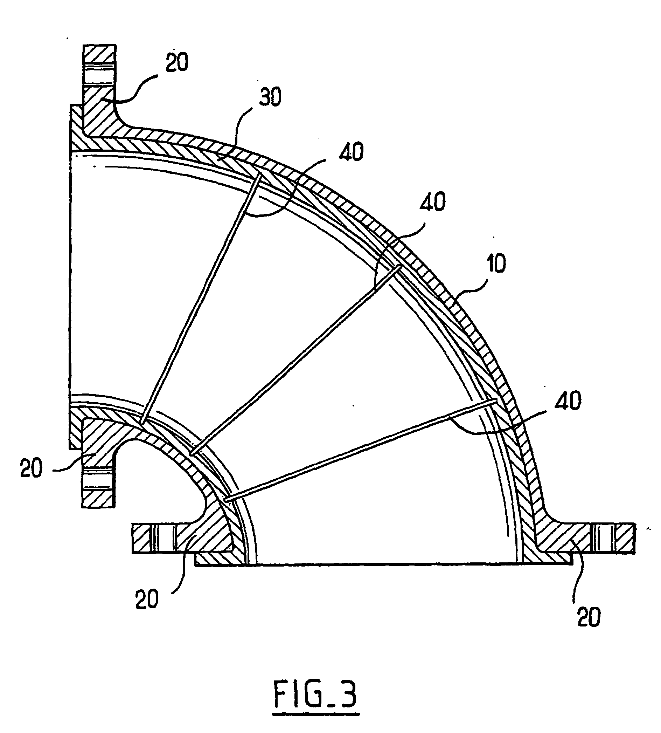

Dans le mode de réalisation de la figure 3 d'un élément de tuyauterie sous forme de coude 10, comportant des brides 20 et un revêtement intérieur de PTFE 30, on a mis en place trois bagues annulaires identiques 40 espacées dans la partie centrale du coude et à distance des brides d'extrémité.

On comprend que les deux modes de réalisation illustrés ne sont nullement limitatifs et que l'invention peut être mise en oeuvre avec toutes sortes d'éléments de tuyauterie, soit des longueurs courantes, soit des raccords, et le nombre et le dimensionnement des bagues annulaires, qui constituent en quelque sorte une armature pour le revêtement de PTFE, peut être déterminé en fonction de la forme et des dimensions des éléments de tuyauterie à réaliser.

## Revendications

1. Elément de tuyauterie métallique, notamment en acier, comportant un revêtement intérieur en résine fluorée, notamment en PTFE, **caractérisé par le fait qu'**il comprend au moins une bague annulaire (4 ; 40) noyée dans l'épaisseur du revêtement intérieur (3 ; 30) de l'élément de tuyauterie métallique (1 ; 10).

2. Elément de tuyauterie selon la revendication 1, sous forme d'un raccord à brides en T, **caractérisé par le fait qu'**il comporte au moins une bague annulaire (4) dans chacune des branches du raccord en T à distance des brides d'extrémité (2).

3. Elément de tuyauterie selon la revendication 2, **caractérisé par le fait qu'**il comporte une bague annulaire (4) dans une des branches, notamment la branche en dérivation, et deux bagues annulaires (4) dans chacune des autres branches, notamment les branches de conduit principal.

4. Elément de tuyauterie selon la revendication 1, sous forme de raccord à brides (10), coudé à 90°, **caractérisé par le fait qu'**il comporte trois bagues annulaires (40) espacées les unes des autres et des brides d'extrémité (20).

5. Elément de tuyauterie selon l'une quelconque des revendications précédentes, **caractérisé par le fait que** lesdites bagues annulaires (4 ; 40) sont en acier.

## Patentansprüche

1. Rohrstück aus Metall, insbesondere aus Stahl, mit einer Innenbeschichtung aus Fluorharz, insbesondere aus PTFE, **dadurch gekennzeichnet, dass** es mindestens einen Ring (4; 40) aufweist, der in der Dicke der Innenbeschichtung (3; 30) des metallischen Rohrstückes (1; 10) versenkt ist.

2. Rohrstück nach Anspruch 1 in Form eines T-förmigen Flanschstutzens, **dadurch gekennzeichnet, dass** es mindestens einen, zu den Endflanschen (2) beabstandet angeordneten Ring (4) in jedem der Schenkel des T-Stutzens aufweist.

3. Rohrstück nach Anspruch 2, **dadurch gekennzeichnet, dass** es einen Ring (4) in einem der Schenkel, insbesondere dem abzweigenden Schenkel, und zwei Ringe (4) in jedem der anderen Schenkel, insbesondere den Hauptrohrschenkeln aufweist.

4. Rohrstück nach Anspruch 1 in Form eines 90°-Flanschstutzens (10), **dadurch gekennzeichnet, dass** es drei Ringe (40) aufweist, die voneinander und von den Endflanschen (20) beabstandet sind.

5. Rohrstück nach irgendeinem der vorhergehenden Ansprüche, **dadurch gekennzeichnet, dass** die Ringe (4; 40) aus Stahl sind.

## Claims

1. Metallic pipe element, particularly made of steel comprising an inner lining made of fluorinated resin, particularly PTFE, **characterised by** the fact that it comprises at least one annular ring (4, 40) embedded in the thickness of the inner lining (3, 30) of the metallic pipe element (1, 10).

2. Pipe element according to claim 1, in the form of a T flanged fitting, **characterised by** the fact that it comprises at least one annular ring (4) in each of the branches of the T fitting remote from the end flanges (2).

3. Pipe element according to claim 2, **characterised by** the fact that it comprises an annular ring (4) in one of the branches, particularly the bypass branch, and two annular rings (4) in each of the other branches, particularly the branches of the main duct.

4. Pipe element according to claim 1, in the form of a flanged fitting (10) with a 90° elbow, **characterised by** the fact that it comprises three annular rings (40) at a spacing from each other and from the end flanges (20).

5. Pipe element according to any one of the previous claims, **characterised by** the fact that the said annular rings (4, 40) are made of steel.
